# EUROPEAN PATENT APPLICATION

(11) **EP 3 422 560 A1**
(43) Date of publication of application: **02.01.2019**
(21) Application number: 17789469.8
(22) Date of filing: 24.04.2017
(51) Int. Cl.: H02P 9/06, H02K 7/116, H02K 7/18

(54) **REFRIGERATOR UNIT**

(30) Priority: 28.04.2016 JP 2016090856
(71) Applicant: MITSUBISHI HEAVY INDUSTRIES THERMAL SYSTEMS, LTD., Tokyo 108-8215 (JP)
(72) Inventor: HOKAZONO, Toshiyuki, Tokyo 108-8215 (JP); JINNO, Hiroki, Tokyo 108-8215 (JP); DHARAMSHI, Kewal, Tokyo 108-8215 (JP); HOSHI, Shintaro, Tokyo 108-8215 (JP); NARITA, Sadaharu, Tokyo 108-8215 (JP)
(74) Representative: Cabinet Beau de Loménie
(86) International application number: PCT/JP2017/016226
(87) International publication number: WO 2017/188187

(57) **Abstract**

The purpose of the present invention is to provide a refrigeration unit that is reduced in size and in which the engine rotation speed is shifted by a transmission mechanism, whereby power of a desired frequency can be generated. The refrigeration unit is mounted on a transportation vehicle and provided with a three-phase AC motor (7) capable of using power inputted through an external power supply input device (6) and three-phase AC power obtained by converting the driving force of a sub-engine (3) using a three-phase AC power generator (5). A one-step transmission (4) is provided between the sub-engine (3) and the three-phase AC power generator (5), and the one-step transmission (4) shifts the engine rotation speed of the sub-engine (3) into a predetermined generator input rotation speed.

## Description

### Technical Field

The present invention relates to a transport refrigeration unit which is mounted on a vehicle.

### Background Art

As an engine driven refrigerator, there is an engine driven refrigerator in which a driving force of an engine is converted into power by a generator to operate a refrigerator. In the refrigerator, there is a refrigerator in which a transmission mechanism is provided between the engine and the generator so as to constantly maintain a rotation speed of a generator even when a rotation speed of an engine is changed (for example, PTL 1) .

### Citation List

### Patent Literature

[PTL 1] Japanese Unexamined Patent Application Publication No. 2-237500

### Summary of Invention

### Technical Problem

However, in the invention described in PTL 1, as the transmission mechanism which shifts the rotation speed of the engine, a continuously variable transmission which requires a large mechanisms such as a belt drive mechanism is applied, and thus, a size of the transmission mechanism increase, and a size of the entire refrigerator increases. Accordingly, in a case where the refrigerator is applied to a transport refrigerator which is mounted on a vehicle which is required to secure a passenger compartment or a transport space, the refrigerator cannot be mounted on the vehicle due to layout restriction. In addition, a regular replacement part such as a belt of the belt drive mechanism is generated, and thus, serviceability is likely to decrease.

Meanwhile, in a case of a refrigerator in which the transmission mechanism is not provided and the engine and the generator are connected to each other, a voltage and a frequency of power generated by the driving force of the engine is changed synchronously with the rotation speed of the engine. Accordingly, in a case where the rotation speed of the engine is changed when the engine is driven, it is difficult to continuously operate the refrigerator at a high-efficiency driving frequency. In addition, in a case where the refrigerator is applied to a vehicle-mounted transport refrigerator that selectively uses the power generated by the driving force of the engine and the power input from the outside, in order to cause the voltage and the frequency of the generated power to be the same as the voltage and the frequency of the power input from the outside, the engine rotation speed should be set to a constant rotation speed according to the frequency of the power input from the outside, and thus, it is difficult to adapt flexibly according to each product such as lowering engine rotation speed for noise reduction by products.

The present invention is made in consideration of the above-described circumstances, and an object thereof is to provide a refrigeration unit which is reduced in size and in which power of a desired frequency can be generated by shifting an engine rotation speed by the transmission mechanism.

### Solution to Problem

In order to solve the above-descried object, a refrigeration unit of the present invention adopts the following means.

That is, according to an aspect of the present invention, there is provided a refrigeration unit which is mounted on a vehicle and is capable of using a power supply of a generator which generates electricity by a driving force of a sub-engine and an external power supply of the vehicle, the refrigeration unit including: an one-stage transmission which connects the sub-engine and the generator to each other and converts an engine rotation speed of the sub-engine into a predetermined generator rotation speed, in which the predetermined generator rotation speed is by the one-stage transmission set such that a voltage and a frequency of the power supply of the generator are the same as a voltage and a frequency of the external power supply of the vehicle.

In the above-described configuration, the engine rotation speed of the sub-engine can be converted into the predetermined generator rotation speed by the one-stage transmission, and thus, the rotation speed can be a desired generator rotation speed without depending on the engine rotation speed. That is, the frequency of the power generated by generator is determined by the generator rotation speed, and thus, the voltage and the frequency of the power supply of the generator can be desired voltage and frequency without depending on the engine rotation speed.

Moreover, by the one-stage transmission, the engine rotation speed of the sub-engine is converted into the generator rotation speed by which the voltage and the frequency of the power supply of the generator and the voltage and the frequency of the external power supply of the vehicle are the same as each other. Accordingly, the voltage and the frequency of the generator power supply are the same as the voltage and the frequency of the external power supply. Therefore, when power is supplied to electronic equipment such as an electric motor included in the refrigeration unit, even in a case where the generator power supply is used or in a case where the external power supply is used, the power supply having the same voltage and frequency can be used, and thus, it is possible to share design of the electronic equipment such as the electric motor.

Moreover, as the transmission mechanism which converts the engine rotation speed into a predetermined generator rotation speed, the one-stage transmission is applied. Therefore, compared to a case where a multistage transmission or a continuously variable transmission is applied, it is possible to reduce a size of the transmission mechanism. Accordingly, the transmission mechanism can be appropriately installed in a vehicle which is required to secure a passenger compartment space or a transport space.

Moreover, the one-stage transmission is applied and the size of the transmission mechanism can be reduced, and accordingly, it is possible to reduce a size of an engine room enclosure in which the sub-engine, the one-stage transmission, and the generator are accommodated. The size of the engine room enclosure is reduced, and thus, it is possible to improve sealability and shielding performance of the engine room enclosure. Accordingly, noise caused by the driving of the sub-engine is hardly radiated to the outside, and the noise can be reduced.

In addition, the one-stage transmission is applied, and thus, the transmission mechanism can be made simpler than the multistage transmission or the continuously variable transmission, and maintainability can be enhanced.

Moreover, during a normal operation, the engine rotation speed of the sub-engine may be a constant rotation speed. In this case, a function for adjusting the engine rotation speed is not provided in the sub-engine, and the engine rotation speed is shifted by the transmission mechanism. Accordingly, compared to a case where a complicated mechanism such as a solenoid is provided in the sub-engine to control the engine rotation speed, it is possible to simply configure the refrigeration unit.

Moreover, in the refrigeration unit according to the aspect of the present invention, the engine rotation speed may be set to be a rated rotation speed according to a maximum generated load.

In the above-described configuration, the rated rotation speed of the engine rotation speed is set according to the maximum generated load. Accordingly, it is possible to appropriately maintain the operation at the engine rotation speed which is the maximum generated load of the generator while maintaining the generator rotation speed having a predetermined effect.

In addition, in the refrigeration unit according to the aspect of the present invention, the engine rotation speed may be set to a rotation speed corresponding to a desired cooling capacity of a refrigerator.

In the above-described configuration, the engine rotation speed is set to the rotation speed corresponding to the desired cooling capacity of the refrigerator. Accordingly, the desired cooling capacity can be obtained while the predetermined generator rotation speed is maintained. For example, as a case where the desired cooling capacity is obtained, a case where the rotation speed of the engine is highly set to obtain a large cooling capacity or a case where the rotation speed of the engine is low set to obtain a low cooling capacity is considered. That is, by changing only the gear ratio of the one-stage transmission, it is possible to configure the refrigeration unit of various cooling capacity bands.

In addition, in the refrigeration unit according to the aspect of the present invention, the refrigeration unit may further include a sealed box which seals the one-stage transmission inside the sealed box.

In the above-described configuration, as the transmission mechanism, the one-stage transmission is applied. Therefore, compared to a case where a multistage transmission or a continuously variable transmission is used, it is possible to reduce a size of the transmission mechanism. Accordingly, the size of the sealed box which seals the one-stage transmission can be also reduced, and it is possible to simply seal the one-stage transmission. Accordingly, it is possible to easily suppress the noise of the one-stage transmission. In addition, in a case where oil is sealed inside the sealed box, it is possible to easily increase lubricity of the one-stage transmission.

Moreover, in the refrigeration unit according to the aspect of the present invention, an anti-vibration portion may be provided in a connection portion between the sub-engine and the one-stage transmission.

In the above-described configuration, the anti-vibration portion is provided in the connection portion between the sub-engine and the one-stage transmission, and thus, the anti-vibration portion absorbs torque fluctuations caused by the drive of the sub-engine, and it is possible to suppress vibrations of the one-stage transmission connected to the sub-engine. Accordingly, it is possible to decrease the noise caused by the vibrations of the one-stage transmission.

In addition, in the refrigeration unit according to the aspect of the present invention, the one-stage transmission may include an input shaft portion which is connected to the sub-engine and an output shaft portion which is connected to the generator, an axis of the output shaft portion may be positioned above an axis of the input shaft portion, and a battery which starts the sub-engine may be provided below the output shaft portion.

In the above-described configuration, the axis of the output shaft portion is positioned above the axis of the input shaft portion, and thus, a space is formed below the output shaft portion. In the above-described configuration, the battery for starting the sub-engine is provided in the space, and thus, a distance between the sub-engine and the battery can be set to a relatively short distance only via the one-stage transmission. Accordingly, it is possible to shorten the battery cable which connects the sub-engine and the battery to each other, and thus, a starter voltage drop is suppressed, and it is possible to improve startability of the sub-engine. In addition, when the sub-engine is started, a large current flows to the battery cable which connects the sub-engine and the battery to each other. However, the battery cable can be shortened, and thus, it is possible to minimize the voltage drop when the engine is started, and it is possible to improve stability.

### Advantageous Effects of Invention

The present invention is to provide a refrigeration unit which is reduced in size and in which the engine rotation speed is shifted, and thus, power of a desired frequency can be generated.

### Brief Description of Drawings

Fig. 1 is a side diagram of a vehicle including a refrigeration unit according to an embodiment of the present invention.
Fig. 2 is a diagram schematically showing the refrigeration unit according to the embodiment of the present invention.
Fig. 3 is a diagram schematically showing a sub-engine and a one-stage transmission according to the embodiment of the present invention.
Fig. 4 is a diagram in which a battery is included in Fig. 3.
Fig. 5 is a graph showing a relationship between a sub-engine load and generator output characteristics of the present invention.
Fig. 6 is a diagram showing a relationship between an engine rotation speed or the like and a cooling capacity of the present invention.
Fig. 7 is a diagram showing a numerical example of Fig. 6.
Fig. 8 is a diagram showing a modification example of Fig. 1.
Fig. 9 is a diagram showing another modification example of Fig. 1.

### Description of Embodiments

Hereinafter, embodiments according to the present invention will be described with reference to the drawings.

### [First Embodiment]

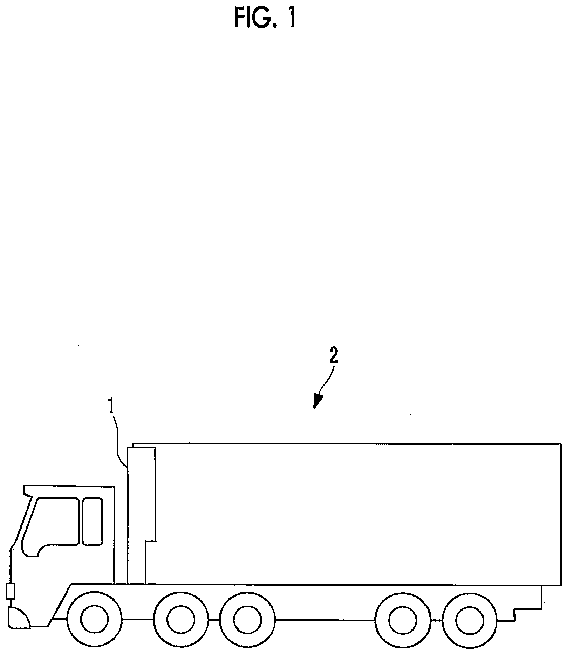

Hereinafter, a first embodiment of the present invention will be described with reference to Figs. 1 to 5.

As shown in Fig. 1, a refrigeration unit 1 according to the present embodiment is a so-called flush mount type refrigeration unit mounted on a front end portion of a carrier of a transportation vehicle (vehicle) 2.

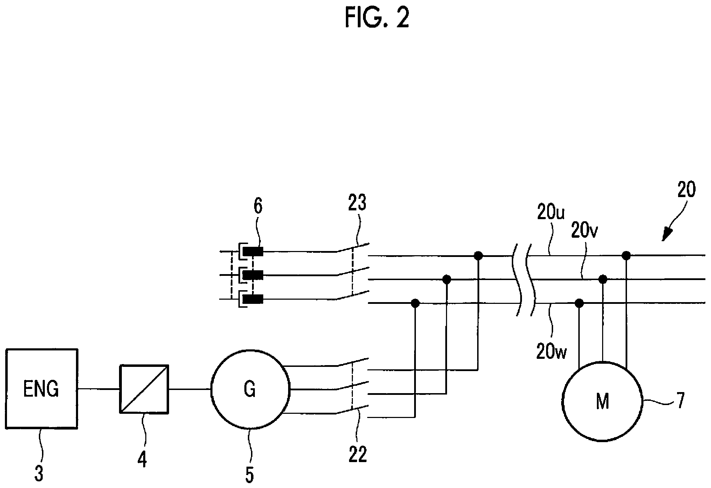

As shown in Fig. 2, the refrigeration unit 1 includes a sub-engine 3, a one-stage transmission 4 which is connected to the sub-engine 3, a three-phase AC generator (generator) 5 which is connected to the one-stage transmission 4, an external power supply input device 6 which can receive power from the outside of the transportation vehicle 2, and a three-phase induction motor (electric motor) 7 which is driven by three-phase AC power generated by the three-phase AC generator 5 and power from an external power supply.

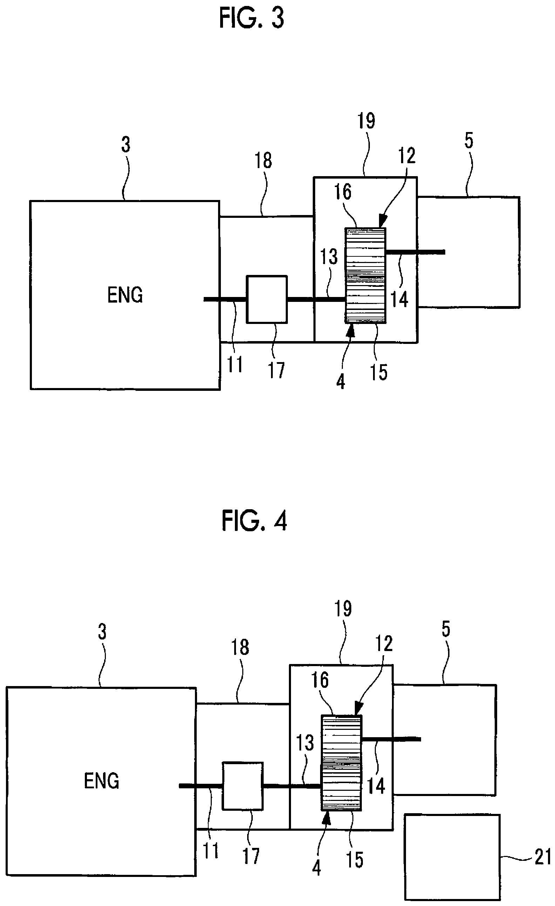

As shown in Figs. 3 and 4, the sub-engine 3 includes an engine output shaft 11 which extends in a direction of the one-stage transmission 4 and transmits a driving force to the three-phase AC generator 5 or the like via the engine output shaft 11. In addition, the sub-engine 3 is covered with an engine room enclosure (not shown). The sub-engine 3 of the present embodiment does not include a mechanism (solenoid) which adjust an engine rotation speed, and during a normal operation, continuously maintains a constant rotation speed (a rated rotation speed in the present embodiment). The rated rotation speed of the sub-engine 3 is a rotation speed corresponding to the maximum load of the three-phase AC generator 5.

The one-stage transmission 4 includes a gear portion 12 which shifts an input rotation speed, an input shaft (input shaft portion) 13 which extends in a direction of the sub-engine 3 from the gear portion 12, and an output shaft (output shaft portion) 14 which is connected to the three-phase AC generator 5. The gear portion 12 includes an input gear 15 which is connected to the input shaft 13 and an output gear 16 which is connected to the output shaft 14. The input gear 15 and the output gear 16 are disposed so as to engage with each other. An engagement aspect between the input gear 15 and the output gear 16 is performed such that the output gear 16 is positioned above the input gear 15. Accordingly, a positional relationship between the output shaft 14 and the input shaft 13 which are respectively connected to the output gear 16 and the input gear 15 is satisfied such that the output shaft 14 is positioned above the input shaft 13.

The engine output shaft 11 of the sub-engine 3 and the input shaft 13 of the one-stage transmission 4 are connected to each other via an anti-vibration coupling (anti-vibration portion) 17. The anti-vibration coupling 17 is hermetically covered with a seal coupling box 18. In addition, the one-stage transmission 4 is hermetically covered with a sealed gearbox (sealed box) 19. Inside of the sealed gearbox 19 is oily by lubricant for a smooth operation of the gear portion 12.

The three-phase AC generator 5 is connected to the one-stage transmission 4 by the output shaft 14 of the one-stage transmission 4, and driven by a predetermined generator input rotation speed (predetermined generator rotation speed) shifted by the one-stage transmission 4, and thus, converts the driving force of sub-engine 3 into three-phase AC power consisting of a U phase, a V phase, a W phase. In this case, a frequency of the converted three-phase AC power is the same as a frequency of the external power supply described later. The three-phase AC power output from the three-phase AC generator 5 is fed to the three-phase induction motor 7 via an electric circuit 20. At this case, the power of the U phase, the V phase, and the W phase flows through corresponding electric circuits 20u, 20v and 20w, respectively, and the power is supplied to the three-phase induction motor 7.

A battery 21 which is a power supply for starting the sub-engine 3 is disposed below the three-phase AC generator 5. The sub-engine 3 and the battery 21 are connected to each other by a battery cable (not shown). When the sub-engine 3 starts, the power is fed from the battery 21 to sub-engine 3 via the battery cable, and a start operation of the sub-engine 3 is started.

The external power supply input device 6 can input the power from an external power supply (in the present embodiment, a commercial power supply in a use area) of the transportation vehicle 2 to the transportation vehicle 2. Accordingly, for example, in a case where the commercial power supply is in an environment where the commercial power supply can be used, by connecting the commercial power supply and the external power supply input device 6 to each other, the power from the commercial power supply is input to the transportation vehicle 2 via the external power supply input device, and the power from the commercial power supply can be used in the refrigeration unit 1.

The three-phase induction motor 7 can be driven by both the power generated by the three-phase AC generator 5 and the power from the outside of the transportation vehicle inputted via the external power supply input device 6, and by switching between a generator-side switch 22 and an external power supply-side switch 23 according to a usage situation of the transportation vehicle, the three-phase AC generator 5 and the external power supply can be selectively used. In addition, the power generated by the three-phase AC generator 5 and the power input from external power supply can also be fed to electronic equipment other than the three-phase induction motor 7 configuring the refrigeration unit 1.

Action and effect exerted by the refrigeration unit 1 of the above-described present embodiment will be described.

In the present embodiment, the engine rotation speed of the sub-engine 3 can be converted into a predetermined generator input rotation speed by the one-stage transmission 4, and thus, the rotation speed of the three-phase AC generator 5 can be a desired generator input rotation speed without depending on the engine rotation speed of the sub-engine 3. Therefore, the frequency of the power generated by the three-phase AC generator 5 is determined by the generator input rotation speed of the three-phase AC generator 5, and thus, the frequency of the power supply of the three-phase AC generator 5 can be a desired frequency without depending on the engine rotation speed.

Moreover, by the one-stage transmission 4, the engine rotation speed of the sub-engine 3 is converted into the generator input rotation speed of the three-phase AC generator 5 by which the frequency of the power supply of the three-phase AC generator 5 and the frequency of the external power supply (the commercial power supply of the use area) of the transportation vehicle 2 are the same as each other. Accordingly, the frequency of the generator power supply is the same as the frequency of the external power supply. Therefore, when power is supplied to the electronic equipment such as the three-phase induction motor 7 included in the refrigeration unit 1, even in a case where the generator power supply is used or in a case where the external power supply is used, the power supply having the same frequency can be used, and thus, it is possible to share design of the electronic equipment such as the three-phase induction motor 7.

Moreover, as the transmission mechanism which converts the engine rotation speed into a predetermined generator input rotation speed, the one-stage transmission 4 is applied. Therefore, compared to a case where a multistage transmission or a continuously variable transmission is applied, it is possible to reduce a size of the transmission mechanism. Accordingly, the transmission mechanism can be appropriately installed in the transportation vehicle 2 which is required to secure a passenger compartment space or a transport space.

Moreover, the one-stage transmission 4 is applied and the size of the transmission mechanism can be reduced, and accordingly, it is possible to reduce a size of an engine room enclosure in which the sub-engine 3, the one-stage transmission 4, and the three-phase AC generator 5 are accommodated. The size of the engine room enclosure is reduced, and thus, it is possible to improve sealability and shielding performance of the engine room enclosure. Accordingly, noise caused by the driving of the sub-engine 3 is hardly radiated to the outside, and the noise can be reduced.

In addition, the one-stage transmission 4 is applied, and thus, the transmission mechanism can be made simpler than the multistage transmission or the continuously variable transmission, and maintainability can be enhanced. Moreover, in the present embodiment, a mechanism (the solenoid or the like) which adjusts the engine rotation speed is not provided in the sub-engine 3, and thus, it is possible to reduce the size of the sub-engine 3, the number of parts decrease, and it is possible to decrease a cost.

Moreover, in the above-described configuration, the engine rotation speed of the sub-engine 3 is set to the rated rotation speed corresponding to the maximum generated load. Therefore, it is possible to appropriately maintain the operation at the engine rotation speed which is the maximum generated load of the three-phase AC generator 5 while maintaining the generator rotation speed having a predetermined effect.

In the above-described configuration, as the transmission mechanism, the one-stage transmission 4 having a relatively small size is applied, and thus, the size of the sealed gearbox 19 which seals the one-stage transmission 4 and the size of the seal coupling box 18 which seals a portion of the one-stage transmission 4 can be reduced, and it is possible to simply the seal the one-stage transmission 4. Accordingly, it is possible to easily suppress the noise of the one-stage transmission 4. In addition, in a case where oil is sealed inside the sealed gearbox 19, it is possible to easily increase lubricity of the one-stage transmission 4.

In the above-described configuration, the anti-vibration coupling 17 is provided in the connection portion between the engine output shaft 11 and the input shaft 13, and thus, the anti-vibration coupling 17 absorbs torque fluctuations caused by the drive of the sub-engine 3, and it is possible to suppress vibrations of the one-stage transmission 4 connected to the sub-engine 3. Accordingly, it is possible to decrease the noise caused by the vibrations of the one-stage transmission 4.

In the above-described configuration, the axis of the output shaft 14 is positioned above the axis of the input shaft 13, and thus, a space is formed below the output shaft 14. In the above-described configuration, the battery 21 for starting the sub-engine 3 is provided in the space, and thus, a distance between the sub-engine 3 and the battery 21 can be set to a relatively short distance only via the one-stage transmission 4. Accordingly, it is possible to shorten the battery cable which connects the sub-engine 3 and the battery 21 to each other, and thus, a starter voltage drop is suppressed, and it is possible to improve startability of the sub-engine 3. In addition, when the sub-engine 3 is started, a large current flows to the battery cable which connects the sub-engine 3 and the battery 21 to each other. However, the battery cable can be shortened, and thus, it is possible to minimize the voltage drop when the engine is started, and it is possible to improve stability.

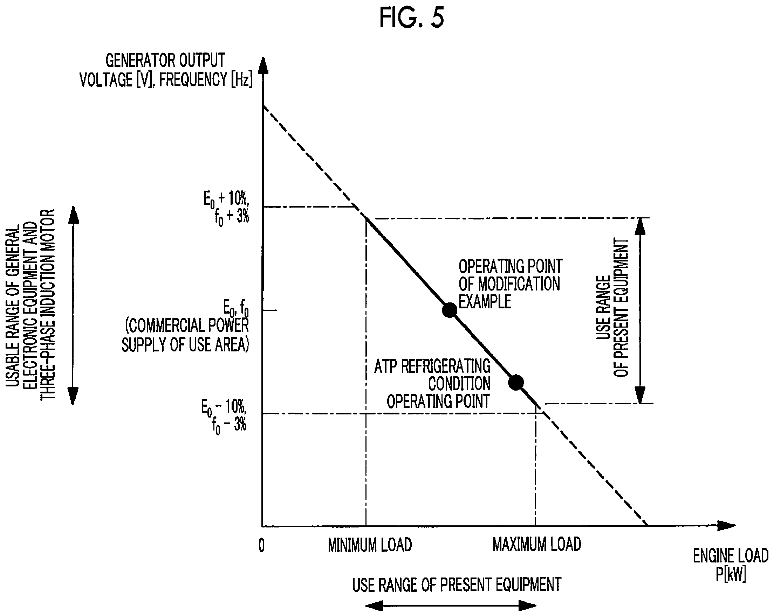

Moreover, in the present embodiment, the example is described in which the rated rotation speed (the rotation speed corresponding to the frequency of the commercial power supply of the use area) of the sub-engine 3 is the rotation speed corresponding to the maximum load of the three-phase AC generator 5. However, the rated rotation speed of the sub-engine 3 may be a rotation speed corresponding to an intermediate load (hereinafter, referred to as an "intermediate load") between the maximum load and the minimum load which is a load lower than an operating point (ATP refrigerating condition operating point) adopted by a general transport refrigerator as shown in Fig. 5. In a case where the rated rotation speed is in the intermediate load, even if there are some variations in the engine rotation speed due to a usage circumstance or the like, a generated power output of the three-phase AC generator 5 can be a voltage and a frequency within a usable range (within a range from -10% to +10% of the voltage of the commercial power supply in the use area and -3% to +3% of the frequency of the commercial power supply of the use area) of general electronic equipment and the three-phase induction motor 7. Therefore, the use range of the present equipment can be included in the usable range of a general electronic equipment or the like.

### [Second Embodiment]

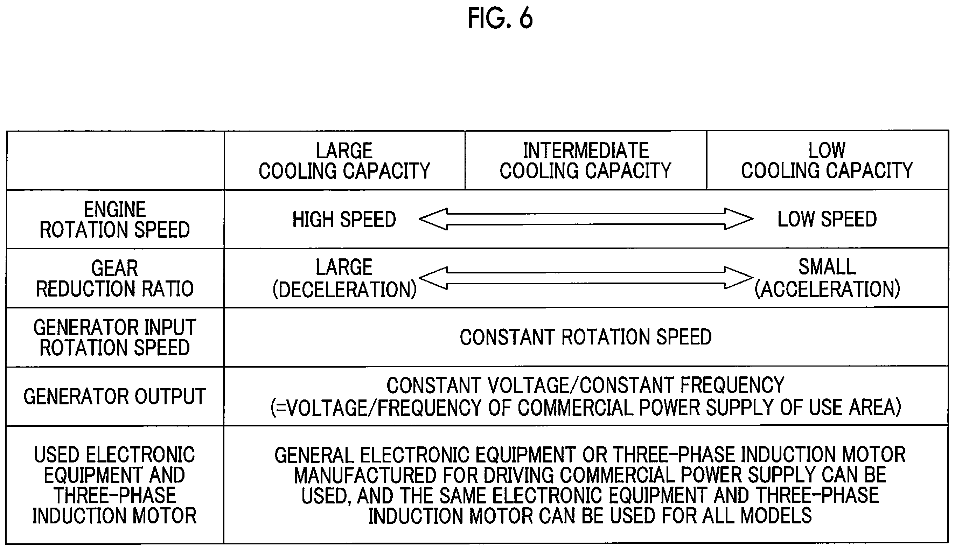

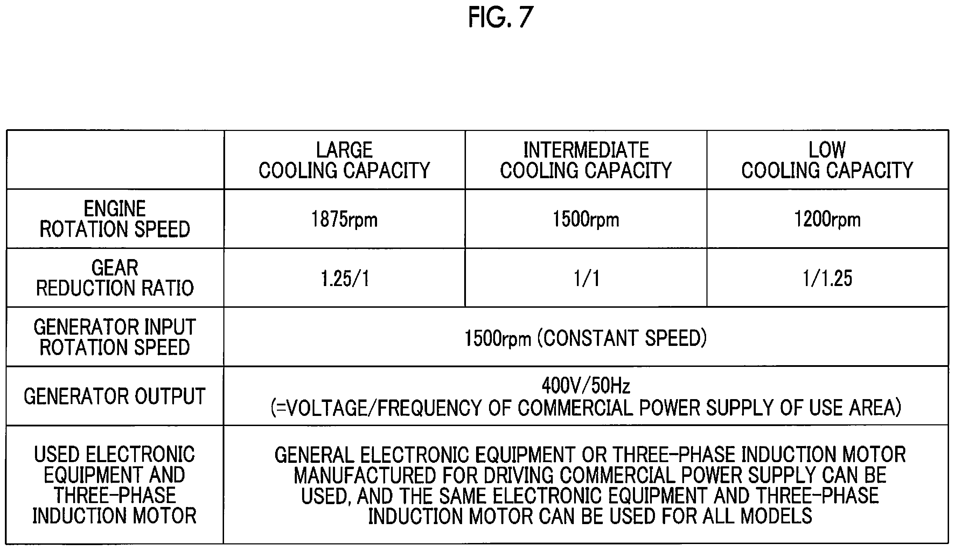

Next, a second embodiment of the present invention will be described with reference to Figs. 6 and 7.

Compared to the first embodiment, in the present embodiment, setting of the engine rotation speed of the sub-engine 3 is partially different. Other matters are similar to those of the first embodiment, and thus, descriptions thereof are omitted.

The engine rotation speed of the sub-engine 3 of the present embodiment is set to a rotation speed corresponding to a desired cooling capacity of the refrigerator, and a gear reduction ratio of the one-stage transmission 4 is set to a ratio by which the engine rotation speed is shifted to a predetermined generator input rotation speed.

As shown in Fig. 6, in a case where it is desired to obtain a large cooling capacity in the refrigerator, the engine rotation speed is high and the gear reduction ratio increases in order to shift the high engine rotation speed to a predetermined generator input rotation speed. Meanwhile, in a case where it is desired to obtain a low cooling capacity in the refrigerator, the engine rotation speed is low and the gear reduction ratio decreases. If a specific numerical example is shown, as shown in Fig. 7, for example, in the case where it is desired to obtain the large cooling capacity, the engine rotation speed is set to 1875 rpm, the gear reduction ratio is set to 1.25/1, and thus, the generator input rotation speed becomes 1500 rpm. In the case where it is desired to obtain the low cooling capacity, the engine rotation speed is set to 1200 rpm, the gear reduction ratio is set to 1/1.25, and thus, the generator input rotation speed becomes 1500 rpm. In this way, the generator input rotation speed of the three-phase AC generator 5 can be made constant without being influenced by the engine rotation speed of the sub-engine 3.

As described above, even if the engine rotation speed is changed according to the cooling capacity, the generator input rotation speed can be set to a constant rotation speed simply by changing the gear reduction ratio, and thus, a desired cooling capacity can be obtained while the predetermined generator rotation speed is maintained. In addition, the generator input rotation speed can be set to a constant rotation speed, and thus, the generator output of the three-phase AC generator 5 can be set to a constant voltage and a constant frequency (in the present embodiment, the voltage and the frequency of the commercial power supply in the use area). Accordingly, the general electronic equipment or the three-phase induction motor 7 manufactured for driving the commercial power supply can be used, and the same electronic equipment and three-phase induction motor 7 can be used for all models. That is, by changing only the gear reduction ratio of the one-stage transmission 4, it is possible to configure the refrigeration unit 1 of various cooling capacity bands, and it is possible to facilitate arrangement according to merchantability.

In addition, in the present embodiment, the engine rotation speed of the sub-engine 3 is set according to the cooling capacity. However, the setting of the engine rotation speed is not limited to this. For example, the engine rotation speed may be set according to a cost, and the engine rotation speed may be set according a noise level.

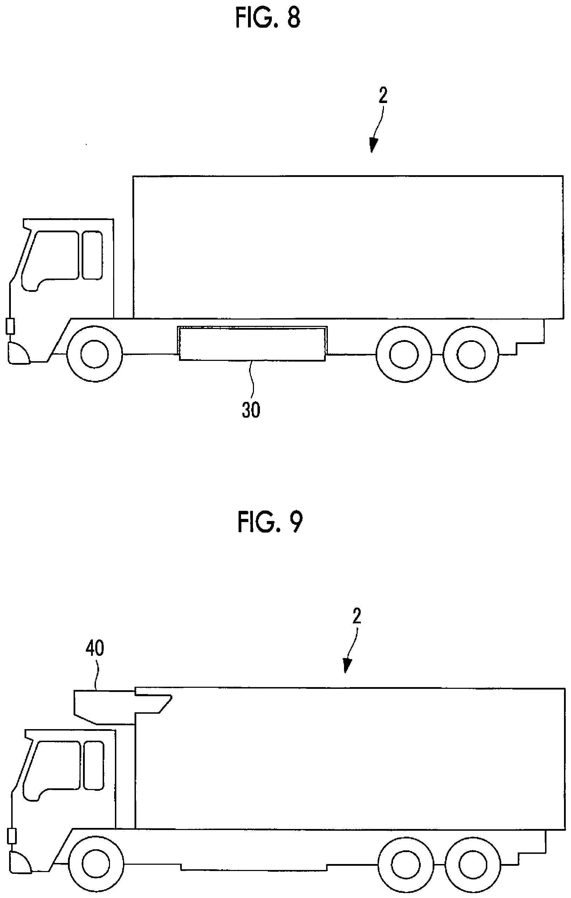

Moreover, in the first and second embodiments, the flush mount type refrigeration unit in which the refrigeration unit 1 is mounted on a front end portion of the carrier of the transportation vehicle 2 is described. However, the disposition of the refrigeration unit 1 is not limited to this. For example, as shown in Fig. 8, an under mount type refrigeration unit 30 in which the refrigeration unit 30 is mounted below the carrier may be adopted, or as shown in Fig. 9, a nose mount type refrigeration unit in which the refrigeration unit 40 is mounted to extend forward from an upper portion of a front surface of the carrier may be adopted.

### Reference Signs List

- 1:: refrigeration unit
- 3:: sub-engine
- 4:: one-stage transmission
- 5:: three-phase AC generator (generator)
- 6:: external power supply input device
- 7:: three-phase induction motor (electric motor)
- 12:: gear portion
- 13:: input shaft (input shaft portion)
- 14:: output shaft (output shaft portion)
- 15:: input gear
- 16:: output gear
- 17:: anti-vibration coupling (anti-vibration portion)
- 19:: sealed gearbox (sealed box)
- 21:: battery

## Claims

1. A refrigeration unit which is mounted on a vehicle and is capable of using a power supply of a generator which generates electricity by a driving force of a sub-engine and an external power supply of the vehicle, the refrigeration unit comprising:
an one-stage transmission which connects the sub-engine and the generator to each other and converts an engine rotation speed of the sub-engine into a predetermined generator rotation speed,
wherein the predetermined generator rotation speed is set by the one-stage transmission such that a voltage and a frequency of the power supply of the generator are the same as a voltage and a frequency of the external power supply of the vehicle.

2. The refrigeration unit according to claim 1,
wherein the engine rotation speed is set to be a rated rotation speed according to a maximum generated load.

3. The refrigeration unit according to claim 1,
wherein the engine rotation speed is set to a rotation speed corresponding to a desired cooling capacity of a refrigerator.

4. The refrigeration unit according to any one of claims 1 to 3, further comprising:
a sealed box which seals the one-stage transmission inside the sealed box.

5. The refrigeration unit according to any one of claims 1 to 4,
wherein an anti-vibration portion is provided in a connection portion between the sub-engine and the one-stage transmission.

6. The refrigeration unit according to any one of claims 1 to 5,
wherein the one-stage transmission includes an input shaft portion which is connected to the sub-engine and an output shaft portion which is connected to the generator,
wherein an axis of the output shaft portion is positioned above an axis of the input shaft portion, and
wherein a battery which starts the sub-engine is provided below the output shaft portion.
